# EUROPEAN PATENT APPLICATION

(11) **EP 2 073 530 A1**
(43) Date of publication of application: **24.06.2009**
(21) Application number: 08019663.7
(22) Date of filing: 11.11.2008
(51) Int. Cl.: H04N 5/12

(54) **Image transmitting apparatus and wireless image receiving apparatus**

(30) Priority: 17.12.2007 JP 2007325276
(71) Applicant: VICTOR COMPANY OF JAPAN, LIMITED, Yokohama Kanagawa-ken, 221-8528 (JP)
(72) Inventor: Owashi, Mikio, Kanagawa-ken 221-8528 (JP)
(74) Representative: Wagner & Geyer

(57) **Abstract**

An image transmitting apparatus(100) is provided with a free-running transmitting unit(20) for transmitting image data and a free-running receiving unit(70) for receiving the image data transmitted from the transmitting unit(20), wherein the transmitting unit(20) includes a market attaching unit operative to attach a vertical synchronization marker to the image data, and the receiving unit(70) includes: a marker retrieving unit operative to retrieve the vertical synchronization marker attached by the marker attaching unit; a marker position monitoring unit(72) operative to monitor whether the marker position of the vertical synchronization marker in the received data is within a predetermined range, and a non-display interval adjusting unit(74) operative to adjust, if the marker position monitoring means(72) determines that the marker position is not within the predetermined range, a period of time in which the image data is not displayed such that the marker position is within the predetermined range.

## Description

### BACKGROUND OF THE INVENTION

### 1. Field of the Invention

The present invention relates to an image transmitting apparatus and a wireless image receiving apparatus capable of displaying a highly reliable image of an object.

### 2. Description of the Related Art

If a camera for capturing an object and a liquid crystal display apparatus for displaying an object image captured by the camera is spaced apart, image data capturing the object need be transmitted from the camera to the display apparatus.

Some known camera systems use a method for transmission wherein a synchronization signal generated in a display apparatus is superimposed on a power supply voltage for transmission to a camera via a cable such as a coaxial cable. In such a camera system, a video signal obtained by capturing an object in the camera is synchronized with the received synchronization signal so as to produce a composite video signal, which is sent to the display apparatus via the same coaxial cable.

The display apparatus isolates the composite video signal received via the coaxial cable from the signal on the coaxial cable and outputs the isolated signal to the liquid crystal display apparatus for reproduction of images. In a monitoring apparatus using such a camera system, however, the cable connecting the display apparatus and the camera tends to be long due to the large distance between the apparatus and the camera.

As a result, the video signal output to the display apparatus will not coincide with the synchronization signal generated in the display apparatus and is delayed by a period of time required to travel back and forth on the coaxial cable. The delay will result in phase shift between the color burst signal and the color subcarrier of the video signal or in a difference in shade, which will be visible on the display apparatus such as a monitor, thereby affecting color reproduction.

In a related-art technology for adjusting phase delay, etc., caused by the length of a transmission cable, a camera superimposes a marker on the signal and sends the signal to a controller so that the controller measures a transmission delay due to the transmission cable. In this approach, the result of measuring a transmission delay is sent from the controller to the camera in the form of a command. The camera advances the phase of the video signal in accordance with the command prior to superimposition on the synchronization signal.

Not only cable transmission but also wireless transmitting apparatuses for transmitting image data wirelessly require a technology for overcoming phase shifts and slight frequency differences occurring between a camera and a display apparatus and for addressing the shifts and differences by synchronization or tuning. One such technology is proposed in, for example, patent document No. 1 listed below.
[patent document No. 1] JP 2001-103573

Non-synchronization and lack of tuning between a transmitting end that transmits, for example, camera image data and a receiving end that receives the camera image data transmitted from the transmitting end will cause various inconveniences. One such inconvenience will be degradation in the image resulting from drop of frames in captured object images or duplication of frames displayed.

Camera systems such as a vehicle rear view monitoring apparatus are required to display object images reliably and on a real time basis. Moreover, it is desirable that such systems be highly reliable in that delays are reduced as much as possible.

### SUMMARY OF THE INVENTION

In this background, a general purpose of the present invention is to provide an image transmitting apparatus and a wireless image receiving apparatus capable of displaying real time images with a small delay.

The image transmitting apparatus according to at least one embodiment of the present invention is provided with a free-tunning transmitting unit for transmitting image data and a free-running receiving unit for receiving the image data transmitted from the transmitting unit, wherein the transmitting unit comprises a marker attaching unit operative to attach a vertical synchronization marker to the image data, and the receiving unit comprises: a marker retrieving unit operative to retrieve the vertical synchronization marker attached by the marker attaching unit; a marker position monitoring unit operative to monitor whether the marker position of the vertical synchronization marker in the received data is within a predetermined range; and a non-display interval adjusting unit operative to adjust, if the marker position monitoring means determines that the marker position is not within the predetermined range, a period of time in which the image data is not displayed such that the marker position is within the predetermined range.

The marker position monitoring unit may preferably monitor whether the marker position is within a predetermined range within a vertical blanking interval at the receiving end.

The non-display interval adjusting unit may preferably adjust the period of time in which the image data is not displayed, by extending or shortening the end of a vertical blanking interval at the receiving end.

The non-display interval adjusting unit may preferably adjust the period of time in which the image data is not displayed, by extending or shortening the end of a horizontal blanking interval within a vertical blanking interval at the receiving end.

The wireless image receiving apparatus according to at least one embodiment of the present invention is a free-running wireless image receiving apparatus for receiving image data transmitted from a free-running transmitting unit and having a vertical synchronization marker attached thereto, comprising: a marker retrieving unit operative to retrieve the vertical synchronization marker attached by the marker attaching unit; a marker position monitoring unit operative to monitor whether the marker position of the vertical synchronization marker in the received data is within a predetermined range; and a non-display interval adjusting unit operative to adjust, if the marker position monitoring means determines that the marker position is not within the predetermined range, a period of time in which the image data is not displayed such that the marker position is within the predetermined range.

The marker position monitoring unit may preferably monitor whether the marker position is within a predetermined range within a vertical blanking interval at the receiving end.

The non-display interval adjusting unit may preferably adjust the period of time in which the image data is not displayed, by extending or shortening the end of a vertical blanking interval at the receiving end.

The non-display interval adjusting unit may preferably adjust the period of time in which the image data is not displayed, by extending or shortening the end of a horizontal blanking interval within a vertical blanking interval at the receiving end.

The marker position monitoring unit may preferably start incrementing a count at the start of a vertical blanking interval at the receiving end and monitor whether the marker position is within a predetermined range within the vertical blanking period at the receiving end by monitoring whether the count corresponding to the marker position is within a predetermined count range.

The non-display interval adjusting unit may preferably delay, if the marker position monitoring unit determines that the count corresponding to the marker position exceeds the predetermined count range, the end of the vertical blanking interval at the receiving end, and advance, if the marker position monitoring unit determines that the count corresponding to the marker position is below the predetermined count range, the end of the vertical blanking interval at the receiving end.

### BRIEF DESCRIPTION OF THE DRAWINGS

Embodiments will now be described, by way of example only, with reference to the accompanying drawings which are meant to be exemplary, not limiting, and wherein like elements are numbered alike in several Figures, in which:
Fig. 1 shows the system structure of a wireless image transmitting apparatus for vehicles;
Fig. 2A is a chart schematically illustrating how image data is processed by the received signal processing unit;
Fig. 2B is a chart schematically illustrating how image data is processed by the received signal processing unit;
Fig. 2C is a chart schematically illustrating how image data is processed by the received signal processing unit;
Fig. 2D is a chart schematically illustrating how image data is processed by the received signal processing unit;
Fig. 3A shows a case where a marker is located below the lower limit of a predetermined permitted market range;
Fig. 3B shows a case where a marker is located below the lower limit of a predetermined permitted marker range;
Fig. 3C shows a case where a marker is located below the lower limit of a predetermined permitted marker range;
Fig. 3D shows a case where a marker is located below the lower limit of a predetermined permitted marker range;
Fig. 4A shows a case where a marker is located above the upper limit of a predetermined permitted marker range;
Fig. 4B shows a case where a marker is located above the upper limit of a predetermined permitted marker range;
Fig. 4C shows a case where a marker is located above the upper limit of a predetermined permitted marker range;
Fig. 4D shows a case where a marker is located above the upper limit of a predetermined permitted marker range;
Fig. 5 schematically shows the configuration of a frame of image data;
Fig. 6 shows an outline of the processing flow of a wireless image transmitting apparatus for vehicles; and
Fig. 7 is a schematic block diagram showing an exemplary structure of the marker attaching unit.

### DETAILED DESCRIPTION OF THE INVENTION

An exemplary wireless image transmitting apparatus for vehicles according to an embodiment of the present invention is in a free-running mode in which an image capturing apparatus and a display apparatus are operated on respective clocks independent of each other. The image capturing apparatus and the display apparatus are not provided with a dedicated microcomputer or a dedicated memory for synchronization with each other.

Desired synchronization between the image capturing apparatus and the display apparatus is achieved merely by means of a synchronization marker signal attached in the image capturing apparatus and signal processing performed in the display apparatus. Therefore, slight differences in frequencies or phases of the respective clocks can be efficiently addressed by adjustment. Accordingly, the occurrence of signal delays is reduced, and image degradation due to drop or duplication of frames is prevented. As a result, high-quality display of images is achieved.

In the following description, the term "image data" does not only mean valid, substantive data for object images. The term may encompass additional data, such as a synchronization signal, necessary for transmission, communication, and display of data.

A detailed description will now be given of the embodiment with reference to the attached drawings.

### (Embodiment)

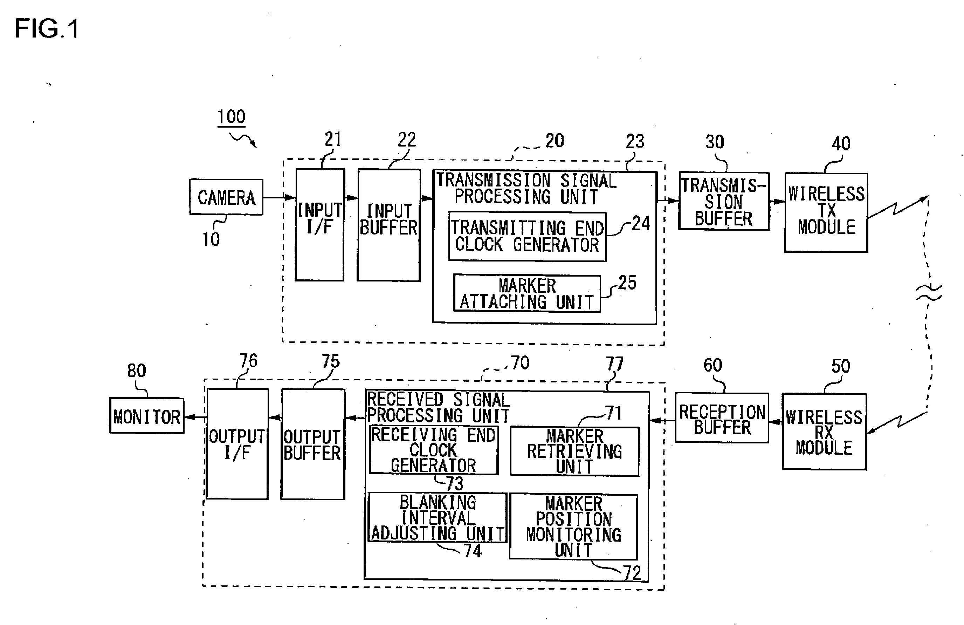

Fig. 1 shows the system structure of a wireless image transmitting apparatus 100 for vehicles (hereinafter, referred to as a vehicle image transmitting apparatus 100). The vehicle wireless image transmitting apparatus 100 is provided with a camera 10 at the rear of the vehicle to monitor objects behind the vehicle.

Image data of objects behind the vehicle captured by the camera 10 is fed to a transmitting end unit 20. The image data is subjected to a predetermined process for transmission by the transmitting end unit 20, temporarily stored in a transmission buffer 30, and is wirelessly transmitted via a wireless TX module 40.

The image data transmitted by the wireless TX module 40 of the wireless image transmitting apparatus 100 is received by a wireless RX module 50. The image data received by the wireless RX module 50 is temporarily stored in a reception buffer 60 and is subjected to a predetermined process for reception in a receiving end unit 70.

The image data processed by the receiving end unit 70 is displayed on a monitor 80, a display apparatus such as an LCD, so as to be viewable by a driver, etc. The driver can check the safety and conditions of area behind the vehicle by viewing the monitor 80.

The transmitting end unit 20 is provided with an input interface 21 for receiving image data from the camera. The transmitting end unit 20 is also provided with an input buffer 22 for temporarily storing the image data received via the input interface. The transmitting end unit 20 is also provided with a transmission signal processing unit 23 for processing the image data temporarily stored in the input buffer 22 so that the data is ready for wireless transmission.

The transmission signal processing unit 23 is provided with a transmitting end clock generator 24 for generating a reference clock for synchronization between devices in the transmitting end unit 20. The transmitting end unit 20 is also provided with a marker attaching unit 25 for attaching a vertical synchronization marker at the start of a frame in the image data transmitted from the transmitting end unit 20.

The receiving end unit 70 is provided with an output interface for outputting the image data so that the object image is displayed on the monitor 80. The unit 70 is also provided with an output buffer for temporarily storing the image data for output to the output interface 76. The unit 70 is also provide with a received signal processing unit 77 fox subjecting the received image data to a desired process.

The received signal processing unit 77 is provided with a receiving end clock generator 73 for generating a reference clock for synchronization between devices in the receiving end unit 70. The received signal processing unit 77 is also provided with a marker retrieving unit 71 for retrieving a vertical synchronization marker included in the received image data and attached in the transmitting end unit 20.

The received signal processing unit 77 is also provided with a marker position monitoring unit 72 fox detecting where in a series of serial image data the vertical synchronization marker retrieved by the marker retrieving unit 71 is located. The received signal processing unit 77 is also provided with a blanking interval adjusting unit 74 for adjusting a vertical blanking interval of the image data, based on the marker position detected by the marker position monitoring unit 72, so that the marker is located within a predetermined range. In addition to the above-described components, the vehicle wireless image data transmitting apparatus 100 may also be provided with other features or functions to enhance units and devices in the apparatus.

In the described structure, the marker retrieving unit 71 retrieves the marker attached by the marker attaching unit 25 at the start of image frame data. The marker position monitoring unit 72 monitors whether the marker retrieved by the marker retrieving unit 71 is located within a predetermined range.

If the marker is not located within the predetermined range, the blanking interval adjusting unit 74 adjusts only the duration of the horizontal blanking interval within the vertical blanking interval of the image data. With this, the clock phase of the image data as a whole processed in the receiving end unit 70 is adjusted, ensuring that the clock in the unit 70 is substantially synchronized with the clock of the transmitting end unit 20.

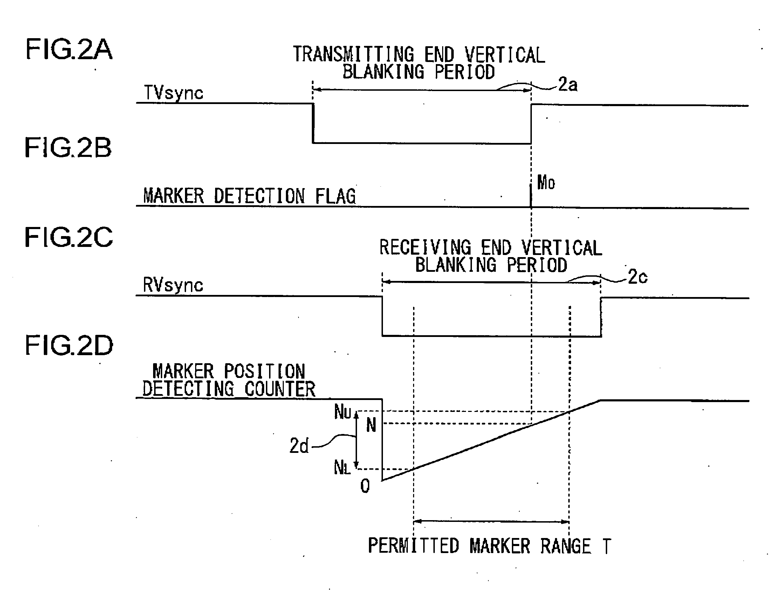

A description will now be given, with reference to Fig. 2, of market detection and monitoring performed by the marker position monitoring unit 72. Figs. 2A-2D are charts schematically illustrating how image data is processed by the received signal processing unit 77.

Fig. 2A is a chart illustrating a vertical synchronization signal (TVsync) of the image data transmitted from the wireless TX module 40. As shown in Fig. 2A, the marker attaching unit 25 of the transmitting end unit 20 attaches a marker at the start of image frame data having a transmitting end vertical blanking interval 2a, based on the reference clock generated by the transmitting end clock generator 24. The marker attached by the marker attaching unit 25 may be a marker signal that the marker retrieving unit 71 is capable of identifying and retrieving.

As shown in Fig. 2B, the marker retrieving unit 71 of the receiving end unit 70 detects the marker from the image data received by the wireless RX module 50 and asserts a marker detection flag M₀. The flag M₀ corresponding to the marker position or the marker may be a flag that indicates a specific portion in the vertical synchronization signal. For example, the flag may indicate a rising edge. In this case, the edge of the data that rises concurrently with the end of the transmitting end vertical blanking interval 2a may be identified as a marker.

Fig. 2C illustrates a receiving end vertical synchronization signal (RVsync) based on the reference clock generated in the receiving end unit 70 by the receiving end clock generator 73. As shown in Fig. 2C, the receiving end vertical blanking interval 2c of the receiving end unit 70 and the transmitting end blanking interval 2a are synchronized on different and independent reference clocks.

In other word, the transmitting end unit 20 and the receiving end unit 70 are in the free-running mode. Therefore, the transmitting end unit 20 and the receiving end unit 70 do not operate in the completely identical phase and frequency conditions but a slight shift occurs in phase and frequency.

As indicated in Fig. 2D, the marker position monitoring unit 72 is provided with a marker position detecting counter (not shown) capable of detecting the marker position. The marker position monitoring unit 72 starts incrementing the count from 0 concurrently with the start of the receiving end vertical blanking interval 2c.

When the marker detection flag M₀ asserted by the marker retrieving unit 71 is found, the marker position monitoring unit 72 identifies the marker position by detecting the count N occurring when the flag is found. The marker position detecting counter may be reset at the falling edge of the vertical synchronization signal and may count time by incrementing the count only within the receiving end vertical blanking interval 2c.

More specifically, the marker position monitoring unit 72 verifies that the marker detection flag M₀ is located within a permitted marker range T within the receiving end vertical blanking interval 2c. In other words, the marker position monitoring unit 72 monitors whether the marker detection flag M₀ is located within a count range 2d corresponding to the permitted marker range T. The count range 2d is a range of counts defined by a count NL corresponding to the lower limit of the permitted marker range T and a count Nu corresponding to the upper limit of the permitted marker range T.

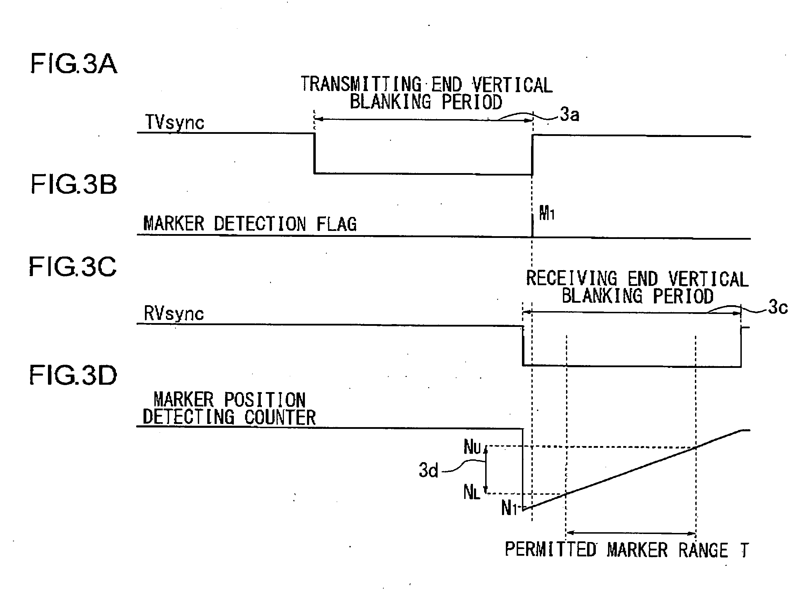

A description will now be given, with reference to Fig. 3, of the process of adjusting the vertical blanking interval performed by the blanking interval adjusting unit 74. Fig. 3A-3D show a case where the marker attached by the marker attaching unit 25 of the transmitting end unit 20 is detected outside the lower limit of a predetermined permitted market range T.

As shown in Fig. 3A, the marker attaching unit 25 attaches a marker at the end of the transmitting end vertical blanking interval 3a, i.e., at a position corresponding to the start of image data having substantive object image information. The marker retrieving unit 71 decodes and retrieves the marker attached to the image data received by the receiving end unit 70 and asserts a marker detection flag M1.

In the example shown in Fig. 3C, the marker detection flag M1 is located within the receiving end vertical blanking interval 3c but outside the permitted marker range T. More specifically, the flag is outside the lower limit of the range. More specifically, the marker detection flag M1 is not located within a count range 3d (NL-Nu) of the marker position detecting counter corresponding to the permitted marker range T. The flag M1 corresponds to a count N1 below the lower limit NL.

In this case, the blanking interval adjusting unit 74 advances the receiving end vertical blanking interval 3c in time (shifts the end of the receiving end vertical blanking interval to the left in the illustration).

In this way, it is ensured that the shift between the transmitting end vertical blanking interval and the receiving end vertical blanking interval is within a predetermined range shown in Fig. 2. Accordingly, drop or duplication of frames can be prevented inexpensively without using a microcomputer, a memory, a high-precision oscillator, or the like.

By processing the signal without using a frame memory, delay commensurate with the time required for storage in a frame memory can be reduced. Further, since what is required is clock-by-clock control of only the blanking portion, occurrence of color shift or unsteady color is prevented and image quality is prevented from being degraded, as reasonably expected.

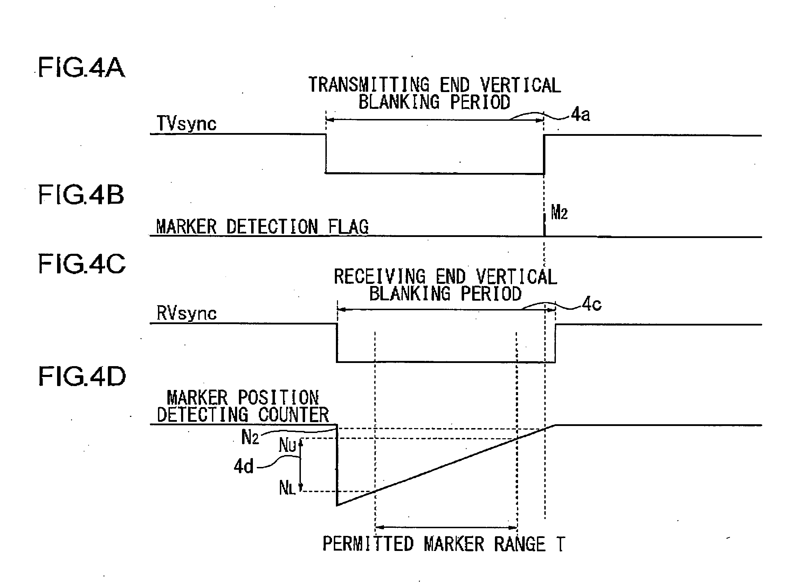

A description will be given, with reference to Fig. 4, of another exemplary process of adjusting the vertical blanking interval performed by the blanking interval adjusting unit 74. Fig. 4A-4D show a case where the marker attached by the marker attaching unit 25 of the transmitting end unit 20 is detected outside the upper limit of a predetermined permitted marker range T.

As shown in Fig. 4A, the marker attaching unit 25 attaches a marker at the end of the transmitting end vertical blanking interval 4a, i.e., at a position corresponding to the start of image data having substantive object image information. The marker retrieving unit 71 decodes and retrieves the marker attached to the image data received by the receiving end unit 70 and asserts a marker detection flag M2.

In the example shown in Fig. 4C, the marker detection flag M2 is located within the receiving end vertical blanking interval 4c but outside the permitted marker range T. More specifically, the flag is outside the upper limit of the range. More specifically, the marker detection flag M2 is not located within a count range 4d (NL-Nu) of the marker position detecting counter corresponding to the permitted marker range T. The flag M2 corresponds to a count N2 above the upper limit Nu.

In this case, the blanking interval adjusting unit 74 delays the receiving end vertical blanking interval 4c in time (shifts the end of the receiving end vertical blanking interval to the right in the illustration).

In this way, it is ensured that the shift between the transmitting end vertical blanking interval and the receiving end vertical blanking interval is within a predetermined range shown in Fig. 2. By processing the signal without using a frame memory, delay can be reduced. Further, since what is required is clock-by-clock control of only the blanking portion, occurrence of color shift or unsteadiness in color is prevented and image quality is prevented from being degraded, as reasonably expected.

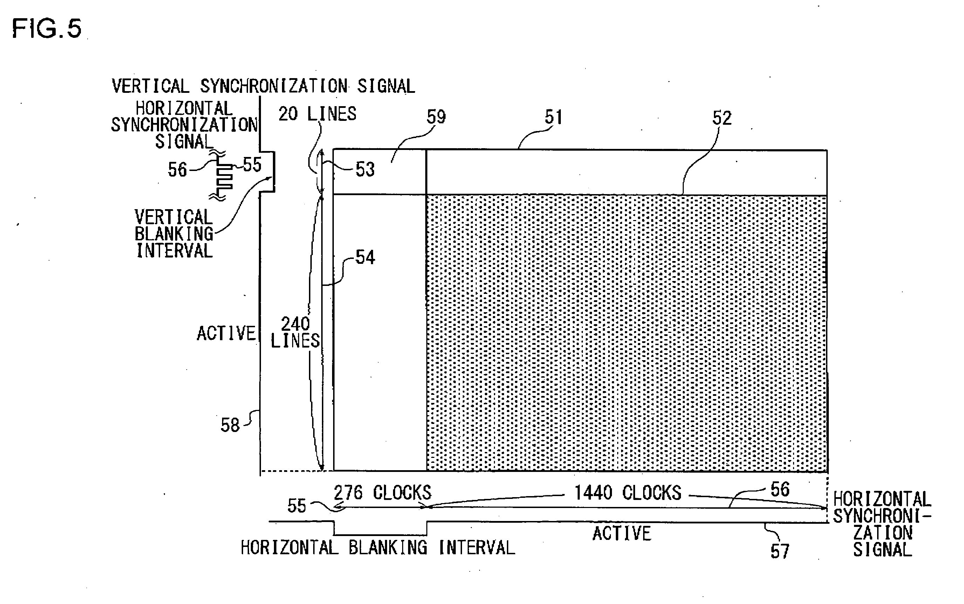

A description will now be given of an outline of the configuration of an image frame (or an image field) at the receiving end processed in the vehicle wireless image transmitting apparatus 100. Fig. 5 schematically shows the configuration of a frame 51 of image data.

As shown in Fig. 5, a vertical synchronization signal 58 of the receiving end unit 70 occurs approximately every 260 lines, of which about 240 lines represent an active portion 54 and about 20 lines represent a vertical blanking portion 53.

A horizontal synchronization signal 57 of the receiving end unit 70 occurs at approximately every 1720 clocks, of which about 276 clocks represent a horizontal blanking portion 55 and about 1440 clocks represent an active portion. The active portion 54 and the active portion 56 constitute an active area 52 of an image frame. Image data corresponding to the active area 52 contains substantive information on an object image and substantially corresponds to a period of time in which the image is displayed.

The vertical blanking portion 53 contains horizontal synchronization signals 57 for about 20 lines and so contains about 20 horizontal blanking portions 55 and about 20 active portions 56.

The blanking interval adjusting unit 74 only adjusts the horizontal blanking interval within the vertical blanking interval. In other words, the blanking interval adjusting unit 74 advances or delays the end of the vertical blanking portion 53 (receiving end vertical blanking interval) on a clock-by-clock basis by adjusting only the horizontal blanking portion 55 within the vertical blanking portion 53.

More specifically, the blanking interval adjusting unit 74 extend or shortens the end of the vertical blanking portion 53 defining a blanking region 59 shown in Fig. 5, by increasing or decreasing the clock count defining the blanking interval in a range of, for example, ±3-±5.

The blanking region 59 corresponds to blanking intervals both in the vertical and horizontal directions. As such, the blanking region 59 does not substantially contain information on an object image and corresponds to an interval when the image is not displayed.

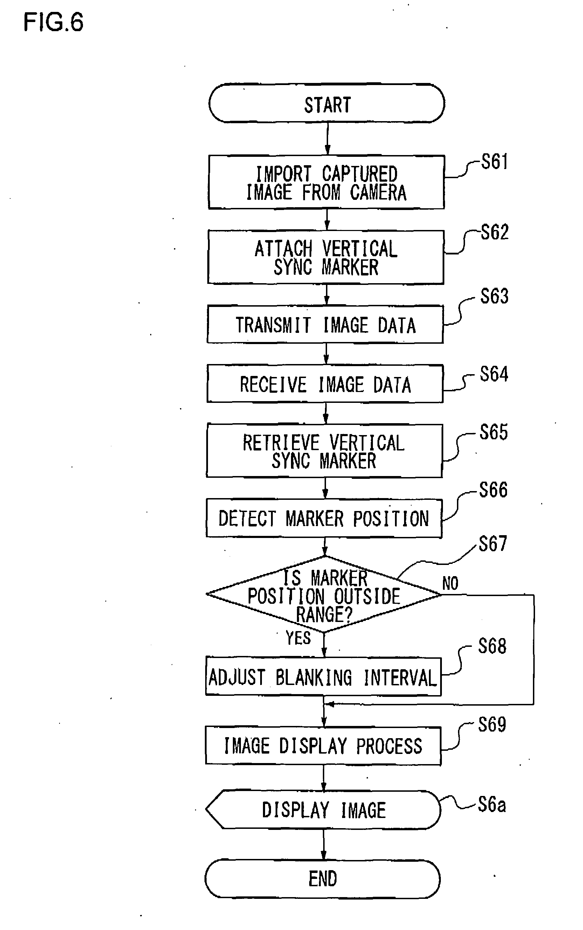

A detailed description will now be given, with reference to the attached drawings, of the operation and process of the vehicle wireless image transmitting apparatus 100. Fig. 6 shows an outline of the processing flow of the vehicle wireless image transmitting apparatus 100.

### (Step S61)

The vehicle wireless image transmitting apparatus 100 imports an object image captured by the camera 10. The camera 10 comprises a solid state image sensing device such as a CCD or a CMOS image sensor, The camera 10 subjects light from an object to photoelectric conversion and outputs a resultant electric signal.

### (Step S62)

The marker attaching unit 25 of the transmission signal processing unit 23 attaches a vertical synchronization marker to the image data of an object to be transmitted. Typically, the marker attaching unit 25 locates a vertical synchronization marker at the start of active data representing valid, substantive object image data.

### (Step S63)

The transmitting end unit 20 transmits the image data wirelessly from the wireless TX module 40 via the transmission buffer 30. A vertical synchronization marker is attached to the image data transmitted from the wireless TX module 40.

### (Step S64)

The receiving end unit 70 receives the image data transmitted from the transmitting end unit 20 with the vertical synchronization marker attached. The receiving end unit 70 is configured in the free-running mode independent of the transmitting end unit 20. The units are operated by reference clocks generated by different clock generators.

### (Step S65)

The marker retrieving unit 71 of the received signal processing unit 77 retrieves the vertical synchronization marker superimposed on the image data and asserts a vertical synchronization marker detection flag. Typically, the vertical synchronization marker is located at the start of valid image data. As such, the flag represents a marker indicating that object image data is located after the flag. If the marker retrieving unit 71 is configured to detect the rising edge of valid object image data or the end of a vertical blanking interval, the edge or the end may be identified as a vertical synchronization marker. In this case, therefore, the marker attaching unit 25 may not attach any marker signals other than the edge or the end.

### (Step S66)

The marker position monitoring unit 72 monitors and detects whether the vertical synchronization marker detection flag is located within the vertical blanking interval at the receiving end vertical synchronization signal. Typically, the marker position monitoring unit 72 monitors and detects whether the vertical synchronization marker detection flag is located within a permitted range T within the vertical blanking interval at the receiving end.

In other words, the marker position monitoring unit 72 monitors whether the count N corresponding to the marker detection flag M₀ is located within a predetermined count range defined by a lower limit count NL and an upper limit count Nu.

### (Step S67)

The received signal processing unit 77 proceeds to step S69 if the unit 77 determines that the vertical synchronization marker detection flag is located within the permitted range T within the vertical blanking interval at the receiving end. The received signal processing unit 77 proceeds to step S68 if the unit 77 determines that the vertical synchronization marker detection flag is not located within the permitted range T within the vertical blanking interval at the receiving end.

### (Step S68)

The blanking interval adjusting unit 74 adjusts the horizontal blanking interval within the vertical blanking interval of the vertical synchronization signal at the receiving end. Typically, the blanking interval adjusting unit 74 advances or delays the end of the horizontal blanking interval by increasing or decreasing the clock count defining the horizontal blanking interval in a range of about ±3 clocks.

By allowing the blanking interval adjusting unit 74 to advance or delay the end of the horizontal blanking interval, the end of the vertical blanking interval in a series of data can be advanced or delayed accordingly. Since the vertical blanking interval is a period in which no image data occurs, the aforementioned process allows the transmitting and receiving ends to adjust the timing without directly affecting the image data itself.

The counter defining the blanking interval by counting clocks is provided with an up-count terminal and a down-count terminal for forcing increments and decrements of the count, in addition to a clock terminal that is fed with a clock signal subject to counting.

The blanking interval adjusting unit 74 is configured to increase or decrease the count by supplying a trigger input to the up-count terminal or the down-count terminal. With this, the blanking interval adjusting unit 74 is capable of extending or reducing the blanking interval.

Adjustment in step S68 performed by the blanking interval adjusting unit 74 is configured to last for several seconds until the marker detection flag is located within the predetermined range. An additional confirming and monitoring step may be provided for confirming and monitoring whether the marker detection flag is located within the predetermined range.

### (Step S69)

The received signal processing unit 77 processes the received and decoded image data to display a desired image and renders the data into image data suitable for display.

### (Step S6a)

The receiving end unit 70 displays the image data on the monitor 80 via the output interface 76. As mentioned above, the timing of the image data is adjusted in the receiving end unit 70 so that the data occurs within the predetermined range from the clocks at the transmitting end. Accordingly, real time, high-quality display is achieved without a delay. As a high-quality image of an object is displayed on a real time basis, the processing flow relating to display is terminated.

As described above, the vehicle wireless image transmitting apparatus 100 achieves image transmission and display in which the occurrence of drop or duplication of frames is reduced in an expensive manner. The vehicle wireless image transmitting apparatus 100 directly adjusts the duration of the horizontal blanking interval of the image data without using any memory for timing and phase adjustment. Therefore, delay in the display image with respect to the camera image is reduced.

Since the vehicle wireless image transmitting apparatus 100 adjusts only the horizontal blanking interval clock by clock, valid portions of the image data substantively representing an object image is prevented from being affected adversely.

Given that an interval between vertical synchronization signals comprises as many horizontal synchronization signals as the number of lines, the blanking interval adjusting unit 74 adjusts the duration of a horizontal synchronization signal by adjusting the duration of the blanking interval. Therefore, the vehicle wireless image transmitting apparatus 100 is capable of adjusting the period of vertical synchronization signals without changing the number of lines per image frame.

Accordingly, the vehicle wireless image transmitting apparatus 100 is capable of displaying received images without causing pixel shift in the horizontal direction.

The vehicle wireless image transmitting apparatus 100 at the transmitting end and the apparatus 100 at the receiving may both be in a free-running mode and is still capable of accommodating a phase difference or a frequency difference within a predetermined range. Accordingly, disadvantages such as arrival of transmission data earlier than when the image is expected to be displayed or failure of transmission data to arrive when the image is expected to be displayed are reconciled.

It will also be appreciated that phase differences between video synchronization signals transmitted and received are not seriously accumulated with time and the state of non-synchronization is prevented from continuing in the vehicle wireless image transmitting apparatus 100. Since the state of non-synchronization is prevented from continuing, the vehicle wireless image transmitting apparatus 100 is capable of reducing the occurrence of, for example, duplicate display (e.g., repeated display of frame data in a buffer) or skip of a frame or frames of image data displayed.

The vehicle wireless image transmitting apparatus 100 is also capable of reducing the occurrence of discontinuous moving images, reducing a missing image or a missing frame, and displaying high-speed moving images of an object in a reliable manner.

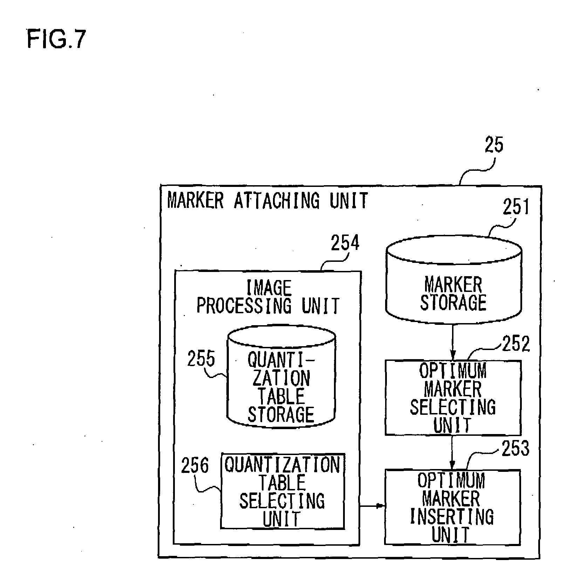

As shown in Fig. 7, the marker attaching unit 25 may be provided with an image compression processor 254 so that a vertical synchronization marker is attached in association with an image compression process. Fig. 7 is a schematic block diagram showing an exemplary structure of the marker attaching unit 25. Of a plurality of markers stored in a marker storage 251, an optimum marker selecting unit 252 selects an optimum marker for the image data.

An optimum marker inserting unit 253 inserts the selected optimum marker in the data. For example, a sequence such as FFFF_FF, which is recognizable by the marker retrieving unit 71, may be used as an optimum marker. An image compression processor 254 in the marker attaching unit 25 uses quantization information stored in a quantization table storage 255 to subject each macroblock to a compression process.

In this process, a quantization table selecting unit 256 selects a quantization table to be applied to a color difference block forming the macroblock. The optimum marker inserting unit 253 merges the compressed image information produced by the image compression processor 254 and the marker selected by the optimum marker selecting unit 252.

As described above, a vertical synchronization marker may comprise an ancillary data portion including an identifiable portion such a sequence FFFF_FF, information indicating selection of a quantization table, and other optional information. The vertical synchronization marker thus attached is wirelessly transmitted and retrieved by the marker retrieving unit 71.

The vehicle wireless image transmitting apparatus 100 is not limited to what is described above. The structure or operation thereof may be modified within a range obvious from the described structure or operation. The technical idea disclosed herein may not only be applied to wireless transmission but also to wired transmission of image data.

## Claims

1. An image transmitting apparatus (100) provided with a free-running transmitting unit (20) for transmitting image data and a free-running receiving unit (70) for receiving the image data transmitted from the transmitting unit, wherein:
the transmitting unit (20) comprises a marker attaching unit (25) operative to attach a vertical synchronization marker to the image data, and
the receiving unit (70) comprises:
a marker retrieving unit (71) operative to retrieve the vertical synchronization marker attached by the marker attaching unit (25);
a marker position monitoring unit (72) operative to monitor whether the marker position of the vertical synchronization marker in the received data is within a predetermined range; and
a non-display interval adjusting unit (74) operative to adjust, if the marker position monitoring means determines that the marker position is not within the predetermined range, a period of time in which the image data is not displayed such that the marker position is within the predetermined range.

2. An image transmitting apparatus (100) according to claim 1, wherein:
the marker position monitoring unit (72) monitors whether the marker position is within a predetermined range within a vertical blanking interval at the receiving end.

3. An image transmitting apparatus (100) according to claim 1 or 2, wherein:
the non-display interval adjusting unit (74) adjusts the period of time in which the image data is not displayed, by extending or shortening the end of a vertical blanking interval at the receiving end.

4. An image transmitting apparatus (100) according to one of the claim 1, 2 or 3, wherein:
the non-display interval adjusting unit (74) adjusts the period of time in which the image data is not displayed, by extending or shortening the end of a horizontal blanking interval within a vertical blanking interval at the receiving end.

5. A free-running wireless image receiving apparatus (70) for receiving image data transmitted from a free-running transmitting unit and having a vertical synchronization marker attached thereto, comprising:
a marker retrieving unit (71) operative to retrieve the vertical synchronization marker attached by the marker attaching unit (25);
a marker position monitoring unit (72) operative to monitor whether the marker position of the vertical synchronization marker in the received data is within a predetermined range; and
a non-display interval adjusting unit (74) operative to adjust, if the marker position monitoring means (72) determines that the marker position is not within the predetermined range, a period of time in which the image data is not displayed such that the marker position is within the predetermined range.

6. A free-tunning wireless image receiving apparatus (70) according to claim 5, wherein:
the marker position monitoring unit (72) monitors whether the marker position is within a predetermined range within a vertical blanking interval at the receiving end.

7. A free-running wireless image receiving apparatus (100) according to claim 5 or 6, wherein:
the non-display interval adjusting unit (74) adjusts the period of time in which the image data is not displayed, by extending or shortening the end of a vertical blanking interval at the receiving end.

8. A free-running wireless image receiving apparatus (100) according to claim 5,6 or 7, wherein:
the non-display interval adjusting unit (74) adjusts the period of time in which the image data is not displayed, by extending or shortening the end of a horizontal blanking interval within a vertical blanking interval at the receiving end.

9. A free-running wireless image receiving apparatus (100) according to one of the claims 6 to 8, wherein:
the marker position monitoring unit (72) starts incrementing a count at the start of a vertical blanking interval at the receiving end and monitors whether the marker position is within a predetermined range within the vertical blanking period at the receiving end by monitoring whether the count corresponding to the marker position is within a predetermined count range.

10. A free-running wireless image receiving apparatus (70) according to claim 9, wherein:
the non-display interval adjusting unit (74) delays, if the marker position monitoring unit (72) determines that the count corresponding to the marker position exceeds the predetermined count range, the end of the vertical blanking interval at the receiving end, and advances, if the marker position monitoring unit (72) determines that the count corresponding to the marker position is below the predetermined count range, the end of the vertical blanking interval at the receiving end.
